# FASCICULE DE BREVET EUROPEEN

(11) **EP 1 125 804 B1**
(45) Date de publication et mention de la délivrance du brevet: **15.09.2004**
(21) Numéro de dépôt: 01400396.6
(22) Date de dépôt: 14.02.2001
(51) Int. Cl.: B60R 25/04, B60R 25/02

(54) **Agencement de sécurité pour véhicule automobile équipe d'un système programme de contrôle et en particulier d'un système de contrôle dit "mains libres"**
Sicherheitsanordnung für ein Kraftfahrzeug mit einem programmierten Steuerungssystem und insbesondere mit einem handfreien Steuerungssystem
Safety arrangement for a motor vehicle provided with a programmed control system and in particular with a hands-free control system

(30) Priorité: 18.02.2000 FR 0002017
(43) Date de publication de la demande: 22.08.2001
(73) Titulaire: VALEO SECURITE HABITACLE S.A.S., 94042 Créteil Cédex (FR)
(72) Inventeur: Morillon, Jacques, 91300 Massy (FR)
(74) Mandataire: Hervouet, Sylvie

(56) Documents cités:
- EP-A- 0 499 001
- FR-A- 2 454 503
- US-A- 4 643 009
- US-A- 5 808 543

## Description

L'invention concerne un agencement de sécurité pour véhicule automobile équipé d'un système programmé de contrôle, principal ou d'accès, et notamment d'un système de contrôle, dit "mains libres".

Dans un véhicule équipé d'un tel système de contrôle d'accès, un certain nombre d'opérations qui impliquait l'usage d'une clé, et, en particulier, l'ouverture des portes du véhicule, le déblocage du système antivol et le démarrage du moteur, sont lancées après un échange de données par voie hertzienne entre un dispositif de reconnaissance équipant le véhicule et un dispositif identifiant prévu porté par l'utilisateur, lorsque celui-ci entre dans la zone de portée prévue pour le lancement de ces opérations.

Ces opérations sont réalisées d'une manière générale par commande électrique, lorsqu'un système "mains libres" est mis en oeuvre et il est essentiel d'éliminer tout risque de lancement intempestif d'une opération pendant une phase de fonctionnement où elle n'est pas prévue. Un tel lancement intempestif peut par exemple intervenir en raison d'une défaillance se produisant au niveau d'un des composants du système de contrôle et par exemple en raison d'une faute imputable à un fonctionnement incorrect d'un processeur. Il est ainsi particulièrement important d'éliminer le risque d'un verrouillage d'un système antivol de véhicule, alors que le véhicule roule, ou le risque d'une coupure du courant alimentant des systèmes sécuritaires, tels que le système de gestion d'injection, le système antiblocage de roue, ou le système de contrôle d'équilibre du véhicule, par suite d'une défaillance intervenant au niveau d'un composant d'un autre système et en particulier du système de contrôle "mains libres".

Il est clair que le risque de lancement intempestif d'une opération existe dans d'autres cas d'exploitation et en particulier à partir du moment où une faute occasionnée par un fonctionnement incorrect d'un système de contrôle, principal ou de niveau supérieur, est susceptible d'affecter le fonctionnement d'autres systèmes du véhicule, qui en dépendent d'une manière ou d'une autre.

Or un inconvénient propre à un système programmé de contrôle et par exemple à un système comportant un microprocesseur, est de ne pas permettre d'obtenir une indication suffisamment fiable concernant le taux de défaillance du système en raison de la constitution matérielle/logicielle mixte de celui-ci.

L'invention propose donc un agencement de sécurité pour véhicule automobile tel que défini dans la revendication 1.

Un agencement tel que défini dans le préambule de la revendication 1 est connu du document EP 0 499 001.

Le choix d'une logique câblée pour réduire les risques est motivé par le fait que le taux de défaillance d'une telle logique est toujours inférieur à celui qu'il est possible d'obtenir à l'aide d'un système programmé élaboré, lorsqu'il s'agit de réaliser une opération relativement simple.

De manière avantageuse, l'organe de commande est mis à diposition d'un utilisateur pour lui permettre de transmettre des instructions spécifiques au véhicule .

De manière plus générale l'organe de commande est conçu pour recevoir des instructions provenant de différents systèmes de gestion de fonctions spécifiques du véhicule fonctionnant en amont de l'agencement de sécurité selon l'invention.

Dans une forme de réalisation d'agencement de sécurité pour véhicule équipé d'un système spécifique antivol, la logique câblée reçoit, d'une part, une instruction d'arrêt, qui est fournie au système de contrôle au moyen de l'organe de commande et qui entraîne la fourniture d'un ordre de verrouillage par le système de contrôle à destination du système antivol, d'autre part, une indication d'état de fonctionnement du véhicule qui traduit la présence du courant d'alimentation distribué dans le véhicule depuis la phase de mise en marche, jusqu'à l'arrêt, ladite logique bloquant tout ordre de verrouillage envoyé par le système de contrôle, si le courant d'alimentation est distribué et qu'elle n'a pas elle-même reçu l'instruction d'arrêt.

Dans une forme de réalisation d'un agencement de sécurité pour véhicule équipé d'un système spécifique contrôlant l'alimentation en courant du véhicule pendant son fonctionnement, la logique câblée reçoit une instruction d'arrêt du moteur du véhicule, qui est fournie au système de contrôle au moyen de l'organe de commande, et qui entraîne la fourniture d'un ordre de coupure d'alimentation par le système de contrôle à destination du système spécifique. De plus, la logique câblée comporte des moyens d'horloge lui permettant de fournir un signal de sécurité, correspondant à une fenêtre temporelle de durée déterminée, à réception d'une instruction d'arrêt, pour bloquer au niveau d'un circuit logique, de type ET, tout ordre de coupure d'alimentation transmis par le système de contrôle à destination du système spécifique, via le circuit logique, lorsque cet ordre est hors de ladite fenêtre temporelle.

L'invention concerne aussi un agencement de sécurité pour véhicule comportant un système de contrôle dit "mains libres" et un véhicule comportant au moins un agencement de sécurité, défini ci-dessus.

L'invention, ses caractéristiques et ses avantages sont précisés dans la description qui suit en liaison avec les figures évoquées ci-dessous.

La figure 1 présente un schéma de principe d'un agencement de sécurité pour véhicule automobile équipé d'un système de contrôle et d'un système spécifique auquel le système de contrôle transmet des ordres.

La figure 2 présente un diagramme de fonctionnement relatif à l'agencement de sécurité, présenté en figure 1.

La figure 3 présente une variante d'agencement de sécurité, tel que présenté sur la figure 1.

La figure 4 présente un diagramme de fonctionnement relatif à la variante d'agencement de sécurité, présenté en figure 3.

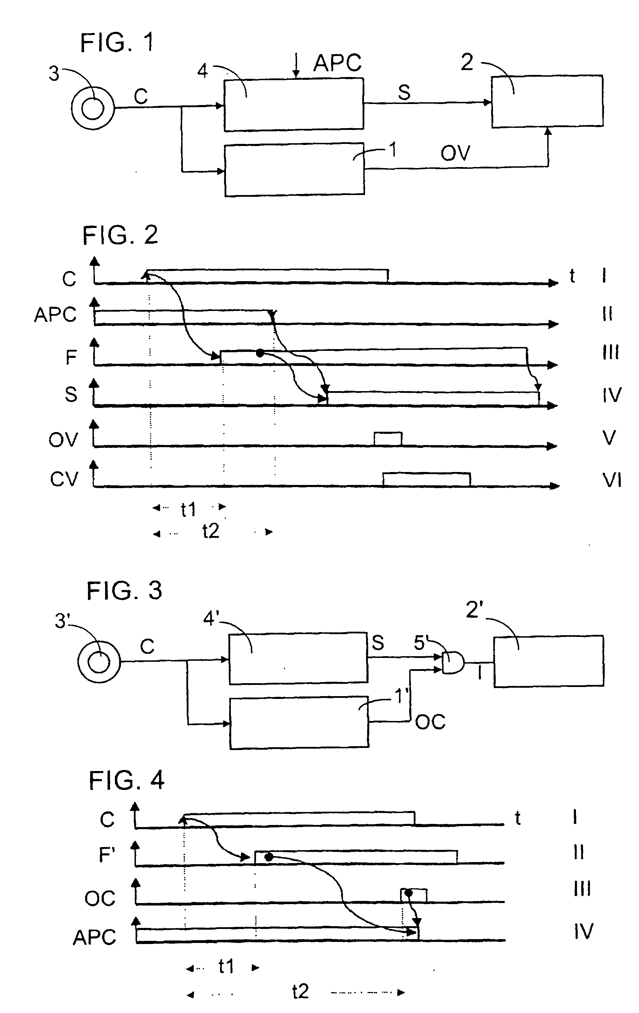

L'agencement de sécurité présenté en figure 1 est destiné à être monté dans un véhicule automobile équipé d'un système programmé de contrôle 1. Ce système de programmé de contrôle 1 est par exemple un système principal, qui a un niveau hiérarchique supérieur par rapport aux autres systèmes qu'est susceptible de comporter le véhicule II peut aussi être un système d'autorisation d'accès et en particulier un système dit "mains libres" par l'intermédiaire duquel des opérations sont réalisées au niveau du véhicule, lorsqu'un utilisateur porteur d'un dispositif identifiant approprié est dans la zone de portée prévue pour ses opérations, au niveau du véhicule.

Il est aussi supposé que le véhicule est équipé d'au moins un système spécifique 2 et que ce système spécifique reçoit des ordres provenant du système de contrôle 1. Un système antivol à commande électrique, un système de contrôle de l'alimentation en courant, un système de gestion d'injection, un système antiblocage de roue, et/ou un système de contrôle d'équilibre du véhicule constituent des exemples de tels systèmes spécifiques.

L'agencement de sécurité, selon l'invention, est prévu pour agir dans le cas où le système de contrôle programmé 1 transmet un ordre à un système spécifique 2 et où cet ordre correspond à celui qui est obtenu pour une instruction transmise par un utilisateur par l'intermédiaire d'un organe de commande 3 qui est mis à disposition de cet utilisateur dans le véhicule.

Il existe en effet un risque que par suite d'un fonctionnement défectueux au niveau du système de contrôle, il y est envoi d'un ordre par ce système, vers un système spécifique, sans qu'il y ait eu d'instruction de l'utilisateur. Ceci pourrait conduire par exemple à l'envoi d'un ordre de verrouillage au système antivol, alors que le véhicule est en marche.

Selon l'invention, l'agencement de sécurité comporte une logique câblée 4 qui est montée entre l'organe de commande 3 et le système spécifique 2, de même que le système de contrôle, de telle sorte que l'instruction transmise par un utilisateur au moyen de l'organe de commande 3 soit simultanément reçue par la logique câblée 4 et par le système de contrôle.

La mise en liaison de la logique câblée avec le système spécifique, destinataire d'un ordre transmis par le système de contrôle, est prévue pour permettre à cette logique d'agir pour empêcher l'exécution, par le système spécifique, d'un ordre, correspondant à une instruction directe d'un utilisateur vers un système, si elle n'a pas reçu elle-même l'instruction.

Le diagramme présenté sur la figure 2 est relatif à une forme de réalisation prévue pour un véhicule automobile équipé d'un système programmé de contrôle, du genre microprocesseur, et d'un système spécifique 2, de type système antivol à commande électrique. L'organe de commande 3 est ici supposé être un bouton commandant le démarrage et l'arrêt du moteur du véhicule.

La phase de démarrage implique l'alimentation en énergie électrique d'un certain nombre de circuits d'appareillage électrique du véhicule qui ne sont pas alimentés, lorsque le véhicule est à l'arrêt complet, cette alimentation dite après contact ou APC, est ici supposée mise en service et hors service par l'intermédiaire du bouton de démarrage et d'arrêt. Une indication de la présence du courant d'alimentation APC, qui est fourni, est transmise à une entrée APC de la logique câblée, tant que ce courant circule et donc en particulier, lorsque le véhicule est en marche.

La présence de ce courant est représentée par un signal APC, binaire, qui est supposé de niveau 1 sur la ligne II du diagramme de la figure 2. Si le véhicule est en fonctionnement et si l'utilisateur désire le mettre à l'arrêt complet, il doit appuyer sur le bouton de démarrage et d'arrêt qui constitue l'organe de commande 3. Cette action se traduit par une instruction C représentée par un signal binaire dont la durée est schématisée sur la ligne I de la figure 2. La logique câblée comporte des moyens d'horloge réalisés selon des techniques connues de l'homme de métier et non représentés ici, qui lui permettent de créer une fenêtre temporelle d'autorisation représentée par un signal F dont la durée est schématisée par un signal binaire de niveau 1, sur la ligne III de la figure 2. Ce signal débute un temps déterminé t1 après le début du signal d'instruction C.

Au bout d'un temps t2, après le début de ce signal d'instruction C, le courant d'alimentation APC est coupé, ainsi que schématisé sur la ligne II, t2 étant choisi supérieur à t1. Un signal de sécurité S est alors envoyé par la logique câblée 4 vers le système antivol, pour autoriser l'exécution de l'ordre de verrouillage OV qu'est chargé de fournir le système de contrôle 1. Il est supposé ici que le système antivol et le système de contrôle sont directement alimentés en énergie à partir de la batterie du véhicule.

L'ordre de verrouillage OV que fourni le système de contrôle est représenté sous la forme d'une impulsion sur la ligne V de la figure 2, il est prévu qu'il ne soit pris en compte par le système de verrouillage que si le signal de sécurité S est également présent. Ceci est obtenu, par exemple, par application des deux signaux S et OV à un circuit logique impliquant la présence simultanée de ces deux signaux pour produire le signal CV qui commande le verrouillage et qui est ici représenté sous la forme d'une impulsion binaire de niveau 1, sur la ligne VI de la figure 2.

L'apparition éventuelle d'un ordre OV produit par le système de contrôle, sans qu'il y ait eu instruction de l'utilisateur, ne peut être prise en compte par le système de verrouillage, puisqu'il n'y a pas eu création de fenêtre F et que le courant d'alimentation n'a pas été coupé. Ceci conduit à ce que le signal de sécurité S ne soit pas produit.

Une variante de l'agencement de sécurité, selon l'invention, est présentée sur la figure 3 il est destiné à un véhicule automobile équipé d'un système de contrôle 1' et d'un système spécifique 2' chargé de contrôler l'alimentation en courant électrique, dite après contact ou APC, des circuits d'appareillage électrique du véhicule qui ne sont pas alimentés, lorsque le véhicule est à l'arrêt complet. L'organe de commande 3' permettant de mettre en marche ou d'arrêter cette alimentation est ici le bouton commandant le démarrage et l'arrêt du moteur du véhicule.

L'agencement de sécurité est ici prévu pour le cas où le système de contrôle transmet un ordre de coupure d'alimentation qui correspond à celui qui est obtenu pour une instruction de coupure transmise par un utilisateur par l'intermédiaire de l'organe de commande 3'.

Ceci vise à nouveau à parer le risque de l'envoi d'un ordre de coupure par le système de contrôle, alors qu'il n'y a pas eu d'instruction de l'utilisateur et, par exemple, lorsque le véhicule est en marche et qu'il est nécessaire que les circuits d'appareillage du véhicule restent alimentés.

Dans l'exemple de réalisation proposé, l'agencement de sécurité comporte une logique câblée 4' à nouveau montée entre l'organe de commande 3' et le système spécifique 2' contrôlant l'alimentation, de même que le système de contrôle 1'. L'instruction transmise par un utilisateur au moyen de l'organe de commande 3' est donc simultanément reçue par la logique câblée 4' et par le système de contrôle 1'. Un circuit logique 5', de type ET, est monté entre une sortie de signal de sécurité S de la logique câblée 4', une sortie d'ordre OC du système de contrôle 1' et une entrée de signal d'instruction de coupure I du système spécifique 2'.

Comme schématisé sur le diagramme présenté en figure 4, la coupure de l'alimentation APC est prévue pour être commandée par une action d'un utilisateur sur l'organe de commande 3', ce qui déclenche la transmission d'un signal d'instruction C représenté par un signal binaire de niveau 1 sur la ligne I de la figure 4. Ce signal est simultanément transmis à la logique câblée 4' et au système de contrôle 1' par l'organe de commande 3'. La logique câblée 4' comporte elle aussi des moyens d'horloge qui lui permettent de créer une fenêtre d'autorisation qui se traduit par un signal F', dont la durée est illustrée sur la ligne II de la figure 4, un temps déterminé t1 après le début du signal d'instruction C.

Le système de contrôle 1' produit un ordre de coupure OC, après avoir pris en compte l'instruction C qui lui a été fournie par l'organe de commande 3'. Du fait du temps nécessaire au traitement de cette instruction et de la valeur choisie pour t1, il est prévu que l'envoi de cet ordre se produise au cours de la fenêtre représentée par le signal F', illustré à la ligne III de la figure 4. L'application simultanée du signal F' et de l'ordre de coupure OC aux entrées du circuit logique 5' se traduit par un signal d'instruction I qui agit sur le système spécifique 2' contrôlant l'alimentation en courant afin de déclencher la coupure de l'alimentation APC, comme illustré par le signal APC représentatif de l'état de cette alimentation sur la ligne IV de la figure 4.

L'apparition éventuelle d'un ordre OC produit par le système de contrôle, sans qu'il y ait eu instruction de l'utilisateur ne peut être pris en compte par le système de contrôle de l'alimentation APC, puisqu'il n'y a pas eu de création de fenêtre F'. La transmission de l'ordre OC est bloquée par le circuit logique 5'.

L'ensemble des modes de réalisation de l'invention ont été décrits dans le cadre d'un organe de commande (3) mis à disposition d'un utilisateur pour lui permettre de transmettre des instructions au véhicule.

De manière plus générale l'organe de commande (3) peut recevoir des instructions provenant de différents systèmes de gestion de fonctions spécifiques du véhicule fonctionnant en amont de l'agencement de sécurité selon l'invention.

## Revendications

1. Agencement de sécurité pour véhicule automobile équipé d'un système programmé de contrôle (1) et d'au moins un système spécifique (2) auquel le système de contrôle transmet des ordres, ainsi que d'un organe de commande (3), le système programmé de contrôle (1) étant monté entre l'organe de commande (3) et le système spécifique (2) de façon à ce que le système programmé de contrôle (1) transmette, sur une instruction (C) reçue de l'organe de commande (3), un ordre (OV) au système spécifique, l'agencement comportant en outre une logique câblée (4) montée également entre l'organe de commande (3) et le système spécifique (2) de manière à recevoir également ladite instruction, **caractérisé en ce que** ladite logique câblée bloque l'ordre (OV) transmis par ce système de contrôle au système spécifique, si ladite instruction n'a pas été reçue par la logique câblée.

2. Agencement, selon la revendication 1, **caractérisé en ce que** l'organe de commande est mis à diposition d'un utilisateur pour lui permettre de transmettre des instructions au véhicule.

3. Agencement, selon la revendication 1, **caractérisé en ce que** les instructions reçues par l'organe de commande proviennent de systèmes de gestion de fonctions spécifiques du véhicule fonctionnant en amont de l'agencement de sécurité.

4. Agencement, selon l'une des revendications 1 à 3, pour véhicule équipé d'un système spécifique antivol (2), où la logique câblée (4) reçoit, d'une part, une instruction d'arrêt (C), qui est fournie au système de contrôle (1) au moyen de l'organe de commande (3), et qui entraîne la fourniture d'un ordre de verrouillage (OV) par le système de contrôle à destination du système antivol, d'autre part, une indication d'état de fonctionnement du véhicule qui traduit la présence du courant d'alimentation (APC) distribué dans le véhicule depuis la phase de mise en marche, jusqu'à l'arrêt, ladite logique bloquant tout ordre de verrouillage envoyé par le système de contrôle, si le courant d'alimentation est distribué et qu'elle n'a pas elle-même reçu l'instruction d'arrêt.

5. Agencement, selon l'une des revendications 1 à 3, pour véhicule équipé d'un système spécifique (2') contrôlant l'alimentation en courant du véhicule pendant son fonctionnement, où la logique câblée (4') reçoit une instruction d'arrêt (C) du moteur du véhicule, qui est fournie au système de contrôle au moyen de l'organe de commande (3'), et qui entraîne la fourniture d'un ordre de coupure d'alimentation (OC) par le système de contrôle à destination du système spécifique, et où la logique câblée comporte des moyens d'horloge lui permettant de fournir un signal de sécurité (S), correspondant à une fenêtre temporelle de durée déterminée, à réception d'une instruction d'arrêt, pour bloquer au niveau d'un circuit logique (5'), de type ET, tout ordre de coupure d'alimentation (OC) transmis par le système de contrôle à destination du système spécifique, via le circuit logique, lorsque cet ordre est hors de ladite fenêtre temporelle.

6. Agencement, selon la revendication 4, dans lequel la logique câblée (4) combine l'indication qui traduit l'absence de courant d'alimentation (APC) succédant à une instruction d'arrêt (C) du moteur du véhicule, produite au moyen de l'organe de commande (3), et un signal correspondant à une fenêtre temporelle d'autorisation (F) déclenché par la réception de l'instruction d'arrêt, pour produire un signal de sécurité (S) qui est transmis au système antivol et en l'absence duquel tout ordre de verrouillage (OV) transmis par le système de contrôle est bloqué,

7. Agencement, selon l'une des revendications 1 à 6, dans lequel le système programmé de contrôle est un système de contrôle dit "mains libres".

8. Véhicule automobile équipé d'un système programmé de contrôle et d'au moins un système spécifique auquel le système de contrôle transmet des ordres, **caractérisé en ce qu'**il comporte un agencement de sécurité, selon l'une des revendications 1 à 6.

## Patentansprüche

1. Sicherheitsanordnung für Kraftfahrzeuge, ausgestattet mit einem programmierten Kontrollsystem (1) und zumindest einem spezifischen System (2), dem das Kontrollsystem Befehle überträgt, sowie mit einem Steuerglied (3), wobei das programmierte Kontrollsystem (1) zwischen dem Steuerglied (3) und dem spezifischen System (2) so angeordnet ist, dass das programmierte Kontrollsystem (1) auf eine vom Steuerglied (3) empfangene Anweisung (C) hin dem spezifischen System einen Befehl (OV) überträgt, wobei die Anordnung ferner eine verdrahtete Logik (4) enthält, die auch zwischen Steuerglied (3) und spezifischem System (2) so angeordnet ist, dass auch sie die genannte Anweisung erhält, **dadurch gekennzeichnet**, das die verdrahtete Logik den von diesem Kontrollsystem dem spezifischen System übertragenen Befehl (VO) blockiert, wenn die genannte Anweisung nicht von der verdrahteten Logik erhalten wurde.

2. Anordnung nach Anspruch 1, **dadurch gekennzeichnet, dass** das Steuerglied einem Benutzer zur Verfügung gestellt wird, damit dieser dem Fahrzeug Anweisungen übertragen kann.

3. Anordnung nach Anspruch 1, **dadurch gekennzeichnet, dass** die von dem Steuerglied erhaltenen Anweisungen von Leitsystemen für spezifische Funktionen des Fahrzeugs stammen, die der Sicherheitsanordnung vorgeschaltet sind.

4. Anordnung nach einem der Ansprüche 1 bis 3 für Kraftfahrzeuge, ausgestattet mit einem spezifischen Diebstahlsicherungssystem (2), wobei die verdrahtete Logik (4) einerseits eine Abstellanweisung (C) erhält, die dem Kontrollsystem (1) mittels des Steuerglieds (3) ausgegeben wird und das Ausgeben eines Verriegelungsbefehls (OC) vom Kontrollsystem zum Diebstahlsicherungssystem bewirkt, und andererseits eine Angabe über den Fahrzeugbetriebszustand, welche einen vorhandenen Versorgungsstrom (APC) darstellt, der ab einer Einschaltphase bis zum Abstellen im Fahrzeug ausgegeben wird, wobei die Logik jeglichen vom Kontrollsystem stammenden Verriegelungsbefehl blockiert, wenn der Versorgungsstrom ausgegeben wird und sie nicht selbst die Abstellanweisung erhalten hat.

5. Anordnung nach einem der Ansprüche 1 bis 3 für Kraftfahrzeuge, ausgestattet mit einem spezifischen System (2'), das die Stromversorgung des Fahrzeugs während seines Betriebs steuert, wobei die verdrahtete Logik (4') eine Anweisung (C) zum Abstellen des Fahrzeugmotors erhält, die mittels des Steuerglieds (3') dem Kontrollsystem ausgegeben wird und das Ausgeben eines Stromunterbrechungsbefehls (OC) vom Kontrollsystem zum spezifischen System bewirkt, und wobei die verdrahtete Logik Zeitmittel enthält, die es ihr ermöglichen, bei Erhalt einer Abstellanweisung ein Sicherheitssignal (S) auszugeben, das einem Zeitfenster mit bestimmter Zeitdauer entspricht, um im Bereich einer logischen Schaltung (5') vom Typ UND jeglichen Stromversorgungsunterbrechungsbefehl (OC) zu sperren, der dem spezifischen System über die logische Schaltung vom Kontrollsystem übertragen wird, wenn dieser Befehl außerhalb des Zeitfensters liegt.

6. Anordnung nach Anspruch 4, bei der die verdrahtete Logik (4) die Angabe über den vorhandenen Versorgungsstrom (APC), die einer mittels des Steuerglieds (3) erzeugten Anweisung (C) zum Abstellen des Fahrzeugmotors folgt, mit einem Signal kombiniert, das einem Berechtigungszeitfenster (F) entspricht und durch Erhalt der Abstellanweisung ausgelöst wird, um ein Sicherheitssignal (S) zu erzeugen, das dem Diebstahlsicherungssystem übertragen wird, wobei bei Fehlen desselben jeglicher, vom Kontrollsystem übertragene Verriegelungsbefehl (OC) gesperrt wird.

7. Anordnung nach einem der Ansprüche 1 bis 6, wobei das programmierte Kontrollsystem ein sogenanntes Freihandzugangskontrollsystem ist.

8. Kraftfahrzeug, ausgestattet mit einem programmierten Kontrollsystem und zumindest einem spezifischen System, dem das Kontrollsystem Befehle überträgt, **dadurch gekennzeichnet, dass** es eine Sicherheitsanordnung nach einem der Ansprüche 1 bis 6 enthält.

## Claims

1. A safety layout for motor vehicle fitted with a programmed monitoring system (1) and at least one specific system (2) to which the monitoring system transmits orders, as well as a control body (3), the programmed monitoring system (1) being installed between the control body (3) and specific system (2) so that the programmed monitoring system (1) transmits an order (OV) to the specific system, upon an instruction (C) received from the control body (3), the layout including moreover a hard-wired logic (4) also installed between the control body (3) and the specific system (2) so as to also receive said instruction, **characterised in that** said hard-wired logic inhibits the order (OV) transmitted by this monitoring system to the specific system, if said instruction has not been received by the hard-wired logic.

2. A layout, according to claim 1, **characterised in that** the control body is available to a user so that it is possible for him/her to transmit instructions to the vehicle.

3. A layout, according to claim 1, **characterised in that** the instructions received by the control body come from the vehicle's specific function management systems operating upstream of the safety layout.

4. A layout, according to one of claims 1 to 3, for a vehicle equipped with a vehicle theft security system (2), where the hard-wired logic (4) receives a shutdown instruction (C), that is supplied to the monitoring system (1) by means of the control body (3) and which leads to supply of vehicle theft security system with a locking order (OV) by the monitoring system, on the one hand, and vehicle operating condition indication which translates the existence of the feed current (APC) distributed in the vehicle from start-up phase, up to shutdown, said logic inhibiting any locking order sent by the monitoring system, if the feed current is distributed and if the logic has not received the shutdown information, on the other hand.

5. A layout, according to one of claims 1 to 3, for a vehicle equipped with a specific system (2') monitoring electric power supply of the vehicle while operating, where the hard-wired logic (4') receives a shutdown instruction (C) from the vehicle's engine, said instruction being supplied to the monitoring system by means of the control body (3') and leading to supply the specific system with a power supply cut-off order (OC) by the monitoring system, and where the hard-wired logic contains clock means with which it can supply a safety signal (S), corresponding to a time slot with a determined duration, upon reception of a shutdown instruction, to inhibit at the level of an AND-type logic circuit (5'), any power shut-off order (OC) transmitted by the monitoring system to the specific system, via the logic circuit, when this order is out of said time slot.

6. A layout, according to claim 4, in which the hard-wired logic (4) combines the indication translating the absence of feed current (APC) further to a shutdown instruction (C) for the vehicle engine, generated by means of the control body (3) and a signal corresponding to an authorisation time slot (F) triggered by the shutdown instruction reception, to generate a safety signal (S) which is transmitted to the vehicle theft security system and in the absence of which any locking order (OV) transmitted by the monitoring system is inhibited.

7. A layout, according to one of claims 1 to 6, in which the programmed monitoring system is a so-called "hand free" monitoring system.

8. A motor vehicle fitted with a programmed monitoring system and at least one specific system to which orders are transmitted by the monitoring system, **characterised in that** it includes a safety layout, according to one of claims 1 to 6.
